# EUROPEAN PATENT APPLICATION

(11) **EP 3 842 617 A1**
(43) Date of publication of application: **30.06.2021**
(21) Application number: 20216716.9
(22) Date of filing: 22.12.2020
(51) Int. Cl.: F01C 1/344, F01C 1/356, F01C 21/08, F01C 21/10, F02B 53/00

(54) **ROTARY VANE INTERNAL COMBUSTION ENGINE**

(30) Priority: 27.12.2019 BR 102019028050
(71) Applicant: Longhi, Irineu Gelson Prado, 99010-410 Passo Fundo (BR)
(72) Inventor: LONGHI, Irineu Gelson Prado, 99010-410 Passo Fundo (BR)
(74) Representative: KIPA AB

(57) **Abstract**

The engine comprises an outer shell (1) in the shape of a fixed ring with two lids (2), an internal rotor (3) with an inlaid central shaft (4) and bearings (5). On the inner surface of the shell (1), inlet (11), compression (12), explosion (13) and escape (14) chambers are positioned. The internal rotor (3) is endowed with drive axle having a cylindrical body (31) endowed with radial slots (32) which house at least one vane (6) pressed radially against a shell (1) by spring (7). The outer shell (1) of the Otto engine has a carburetor and a feed duct (15) of the air-fuel mixture. At the start of the explosion chamber (13) the spark plug (16) is positioned. At the end of the explosion chamber (13) an escape chamber (14) with an escape duct (17) is positioned. The outer shell (1) of the Diesel engine has a butterfly valve and an air feed duct (15). At the start of the explosion chamber (13) a fuel injection spout (16') is positioned, and at the end of the explosion chamber (13) an escape chamber (14) with an escape duct (17) is positioned.

## Description

### Technological sector of the invention

The present invention refers to an innovative rotary internal combustion engine with vanes mounted radially on the rotor which is concentric on a substantially cylindrical stationary shell, resulting in maximum torque and improved energy usage of the fuel.

### State of the art

Rotary combustion engines have been known for a long time, the most well-known being the Wankel that present an oblong shell endowed with inlet and escape channels. This engine essentially consists of a chamber being oblong in shape, of the "double eight" type. Therein, a substantially triangular rotor acts as piston of the engine, eccentrically rotating in relation to the main shaft, which is equivalent to the crankshaft of piston engines. The shapes of these two elements are such that while the corners of the piston are always equidistant from the walls of the chamber - and very near them, forming a sealing - they successively increase and decrease the space between the convex sides of the triangle - the rotor - and the walls of the chamber. Therefore, if a mixture is injected into one of the chambers, when it is increasing in size, it will be compressed in the subsequent reduction of volume, while the rotor, or piston, rotates. Accordingly, the classic four-stroke cycle: inlet, compression, explosion and exhaustion is produced and furthermore, the three faces of the rotor are in three different phases of the cycle, at the same time.

The advantages of the rotary Wankel engine on conventional alternating piston engines are multifold. In the first place, there are no vibrations due to the fact that there is only rotary movement, meaning even lesser wear and longer life. The Wankel engine has few components and is much smaller. Additionally, it generates more power and more torque than an alternating engine of the same cylinder power. This is because each side of its rotor is in a phase of the cycle, generating more explosions around the crankshaft than the piston engine. Its drawbacks include a not very elastic power curve and the problems of maintaining an ideal sealing between the corners of the rotor and the walls of the combustion chamber due to thermal dilation, which causes difficulties due to the rigor of the design specifications and to the minimum tolerances in production. Additionally, the Wankel engine heats much more than the alternating engine, due to the high rotations, always working in high rotation. Another drawback is the high emission rate of polluting gases, since the combustion is incomplete.

Vane-type rotary combustion engines are also known, exemplified in patent documents PI 1101432-6, BR 10 2012 001390-8, GB 2,185,072, US 3,254,489, US 3,464,395, US 3,762,37 and US 4,672,813. These engines are characterized by having a substantially elliptical shell with a decentralized rotor, radial vanes and side lids. This engine is of the single rotation type, as its parts rotate around a single axle with the same angular speed and which produces a cycle upon each revolution. Therefore, the engine is formed by a shell (stator), an eccentric rotor in relation to the shell, where the radial vanes are positioned that delimit the chambers in the space between the rotor and the shell. The windows are positioned on the side lids near to neutral where the inlet and exhaustion collectors are positioned. A first drawback of this type of engine is the need for an overfeed system to wash the combustion gases and to insert the fuel mixture inside the chamber. Another drawback is that there is a permanent variation of the volume of the combustion chamber by the rotation, as the surface of the rotor approaches and distances from the shell. Yet another drawback of this type of engine is the need for long vanes that are subject to greater requests for flexion generated by the attrition of its ends during sliding against the inner surface of the shell, and by the high pressures occurring in the engine strokes, especially the explosion stroke.

### Novelty and Objective of the Invention

The object of the present invention is an innovative rotary internal combustion engine having radial vanes that project from a rotor which is concentric in a substantially cylindrical stationary shell where recesses are machined which, jointly with the anterior vane and the posterior vane form chambers which attend to the working cycle of the internal combustion engines, efficiently overcoming said limitations of the state of the art.

The working cycle of the vane rotary engine of the invention follows the same strokes as the alternating internal combustion engines, comprising the stages in this order: Inlet, Compression, Explosion, Combustion and Discharge.

In a basic concept, the rotary engine is comprised of a shell in the shape of a fixed outer ring, an internal rotor, an internal central axis inlaid in the rotor, bearings supporting this central axis and centralizing it on the outer shell forming the cradle of the drive axle, two side lids rigidly mounted on the outer shell and which slide-fit onto the central axis. The bearings of the drive axle can be mounted on the outer shell and on the outer part of the power take-off shaft.

Inside the outer shell cavities are machined, acting as suitably-shaped chambers fulfilling each stage of the cycle of the rotary internal combustion engine.

The internal rotor is a cylindrical body where equidistant radial slots are machined which house vanes. Each slot may have one or more vanes. The vanes are rectangular plates having suitable thickness to sustain the pressures to which they are subject. The vanes will be mounted into the slots of the rotor, with slide adjustment, but which enable improved sealing between the chambers of the outer shell, the internal rotor and the lids of the engine. The edge of the free end of each vane, which slides on the undulating surfaces of the shell, may be rounded to temper its working and improve the sealing. Each vane can be pushed by springs against the outer shell to guarantee the best possible sealing.

In an optional concept, the rotary engine is comprised of an inner shell in the shape of a fixed ring and an outer rotor, an internal central axis inlaid in the inner shell, two side lids rigidly mounted on the inner shell. A transmission system can be mounted on one of the lids of the outer rotor, for example, a crown and pinion system.

### Technical advantages of the invention in relation to the alternating engines.

The main advantage of the rotary vane internal combustion engine of the invention lies in rotary chambers that are formed during the rotation between the stationary shell and the rotor, the side lids, and the radial vanes. The shape of each chamber is specific for each "engine stroke cycle" along the pathway. So, for example, the inlet chamber is designed to suck in the atmospheric air when the set of parts forming it passes therethrough. Afterwards the same occurs with the compression chamber and so on and so forth.

The working of the vane rotary engine of the invention can adjust to the desired working cycle, that is, the Otto Cycle, Diesel Cycle or Two-Stroke Cycle.

In the case of the Diesel Cycle engine, the following sequence of stages occurs:
- upon start-up, the inlet chamber, considered the initial chamber, rotates and is filled with atmospheric air in an appropriate amount supplied by the regulating valve from its working regime;
- next is the compression phase in which the air is compressed reaching high temperature;
- a pump injects the fuel into the chamber, in the appropriate amount, which, owing to the high temperature, explodes;
- the mixture dilates and starts to produce work, always moving in the region of maximum diameter - maximum torque, thus arriving at the end with all its energy transformed into work.

The following terminology is adopted in the present specification:
- Inlet chamber is considered the initial chamber;
- Work is understood as thrust times distance travelled by the mobile;
- Torque is understood herein as thrust times lever arm;
- Energy is the capacity of a certain amount of air-fuel mixture, to produce work.

In the Otto Cycle the difference lies in the inlet of a mixture of air with fuel, performed by a carburetor, which, at the end of the compression, receives an electric spark, explodes, dilates, and always moves in the region of maximum torque, producing work.

The vane rotary engine of the invention is designed to work at maximum torque always. The result from this is least necessary thrust to perform the work. This is how the total energy from the fuel is utilized with the minimum of thrust, meaning the fuel is fully consumed, transforming all its potential energy into work.

The distance needed for the total burning of the fuel can be calculated and adapted to the diameter of the path in which this work is carried out and will have at most a total rotation of 360°, thus completing the cycle. However, it there is a need to increase the distance of movement, it is possible to actuate on the diameter of the internal rotor and on the entire assembly.

Particularly, in a comparison between the rotary engine of the invention and the current engines with a four-stroke cycle, the latter only conclude their cycle upon completing 720° in rotation (two full revolutions). In the other engines of the two-stroke type, Wankel and some types of rotary vane engines, they manage to perform a complete working cycle in 360°.

The cylinder power total of the engine is obtained by multiplying the inlet chamber volume (ICV) by the amount of these chambers and by the total number of chambers. For example, if the engine is designed with three CA and a total of chambers = 24, the cylinder power will be calculated by the formula: ICV x 3 x 24.

It is thus perceived that the freedom to actuate on the diameter of the rotor and its width enables solutions that are easy to include in the designs. Furthermore, the two greatest advantages of this type engine will always be noted, that is: the maximum torque and the maximum usage of the energy from the air-fuel mixture upon burning.

There is also the possibility of mounting several engines on the same axle so as to obtain greater performance.

It should also be noted that it is possible to achieve a sealing between the chambers by way of springs that compress the vanes against the shell, through the precision of their manufacture and assembly and through lubricating oil. The use of more than one vane per slot also improves sealing. It is important to emphasize that the direction of rotation of each chamber is separated by the vanes that move radially which causes mass imbalance, but, as there will almost always be diametrically opposed vanes, the likelihood of there being a reasonable balance of masses is good, in which case the engine will run more smoothly.

Yet further advantages of the rotary vane internal combustion engine of the invention are:
- ease of manufacture considering the machine tools that currently exist and the substantially circular shape of the stationary shell;
- absence of intake and exhaust valves, their drive shafts and other chains and drive belts;
- fairly small number of parts;
- simple design of components, ensuring less wear and tear, requiring low maintenance;
- relatively simple maintenance;
- use of varied fuels, enabling the choice of the ones most suited to the manufacturer's objectives, being able to opt for the ones available with low emission of pollutants;
- possibility to produce from microengines to large engines, with application in vehicles or stationaries;
- working of the low-noise engine because all the energy from the combustion is transformed into work.

### Technical advantages of the invention in relation to rotary engines

An important advantage of the rotary vane internal combustion engine of the invention compared to other rotary engines is that rotary chambers form during the rotation between the stationary shell and the rotor, the side lids and the radial vanes, and the shape of each chamber is specific for each "engine stroke cycle" along the pathway.

Another no less important advantage of the rotary engine of the present invention is the possibility of designing full cycles in a lower fraction of rotation degrees. For example, designing three Inlet chambers provides the opportunity of three complete cycles at each 120° which enables tripled work upon each revolution. Therefore, there are several chambers, all working cooperatively and simultaneously to obtain the end result. The number of chambers is the choice of the designer.

Yet further advantages of the invention are:
- the chambers are machined on the shell, generating reduced-height cavities, which facilitates the sliding of the ends of the vanes;
- the vanes are discretely protruding, not being exposed to major flexion strain and shearing;
- the path of the explosion chamber is long, guaranteeing great efficiency in the combustion;
- adoption of engine brake with great constructive simplicity;
- ease of execution of the feed and exhaust channels;
- possibility of applying to the Otto cycle and Diesel cycle;
- ring-shaped, in the case of application as reaction engine, having a free internal area that improves the cooling of the engine;
- possibility of working in reaction engines.

### List of drawings

In the present specification, the components of the drawings are not necessarily to scale, the emphasis having been placed on illustrative examples of the aspects of the invention, which may be represented in simplified form.

In order for the present invention to be fully understood and led to fruition by any person skilled in this technological sector, below is a clear and full description of each one of the accompanying drawings presented below:
**Figure 1** **-** perspective of the rotary engine with vanes mounted;
**Figure 2** **-** perspective of the rotary engine without the lids;
**Figure 3** **-** radial section of the rotary engine;
**Figure 4** **-** isolated perspective of the internal rotor;
**Figure 5** - front view of the internal rotor with vanes mounted;
**Figure 6** - preferred profile of a vane;
**Figure 7** - radial section of the rotary engine applied to the Otto cycle;
**Figure 8** - radial section of the rotary engine applied to the Diesel cycle;
**Figure 9** - radial section of the engine, indicating the engine brake;
**Figure 10** - perspective of a constructive option of the engine;
**Figure 11** - perspective of the outer ring of the constructive option of the engine;
**Figure 12** - radial section of the engine of the constructive option;
**Figure 13** - radial section of the constructive option of the engine applied to the Otto cycle;
**Figure 14** - radial section of the constructive option of the engine applied to the Diesel cycle;
**Figure 15** - radial section of the constructive option of the engine indicating the engine brake;
**Figure 16** - perspective of the constructive option of the rotary engine applied to the reaction engine;
**Figure 17** - perspective of the constructive option of the rotary engine with transmission system by front gear;
**Figure 18** - perspective of the constructive option of the rotary engine with transmission system by peripheral gear.

### Detailed description of the invention

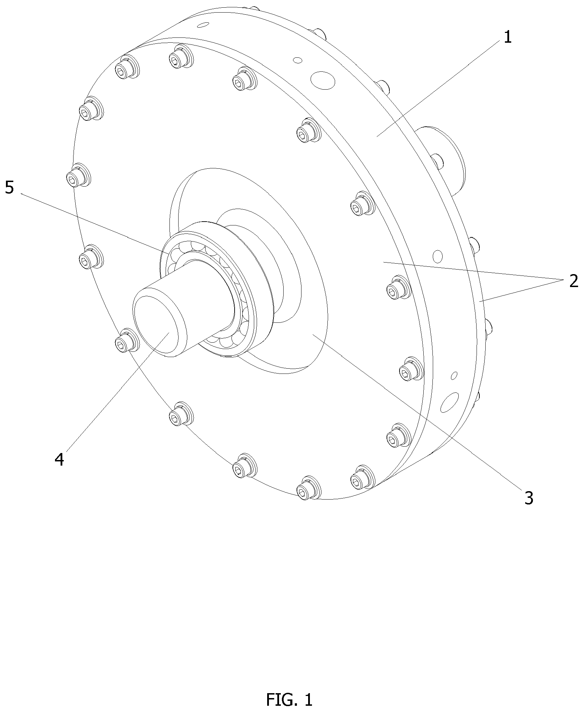

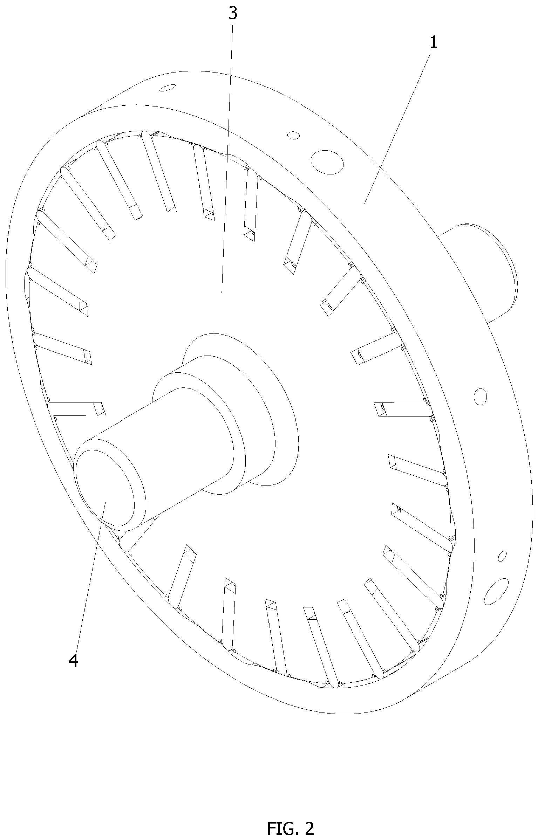

Figures 1 and 2 illustrate the main components of the basic concept of the rotary engine which is comprised of an outer shell (1) in the shape of a fixed outer ring with two lids (2), an internal rotor (3) with an inlaid central shaft (4) and bearings (5) which support the central axis (4).

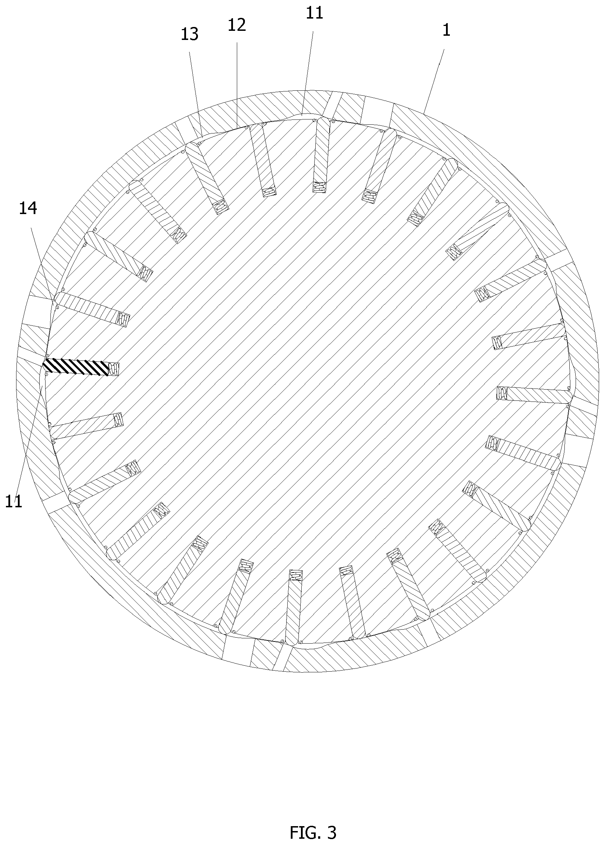

Figure 3 illustrates, merely as an example, the rotary engine of the invention that performs four work cycles per revolution. On the inner surface of the shell (1) cavities are executed, acting as chambers (11, 12, 13 and 14) appropriately shaped to enable the working of the engine, as will be detailed ahead.

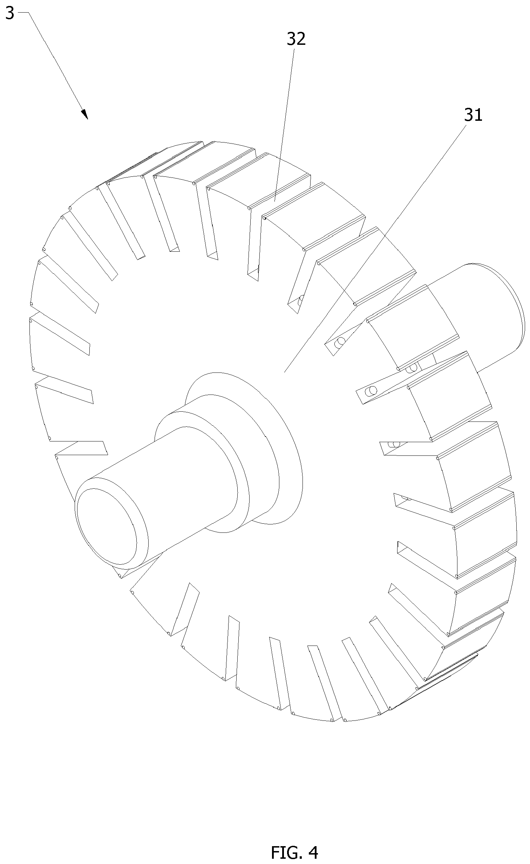

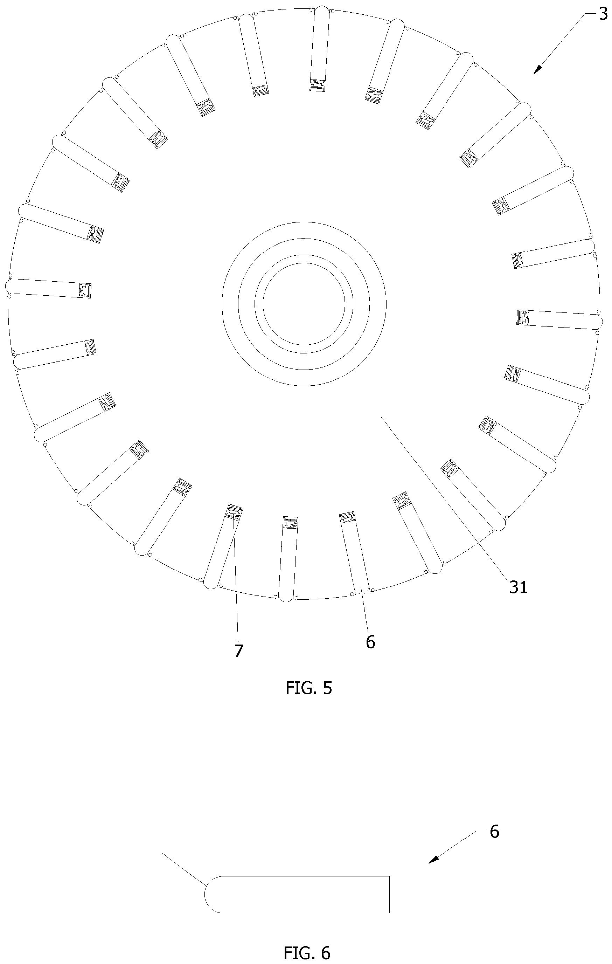

Figures 4 and 5 detail the internal rotor (3) which performs the function of drive axle and presents the shape of a cylindrical body (31) where radial slots (32) are machined which house vanes (6). Each slot radial (32) can house one or more vanes (6) which are rectangular plates having suitable thickness to sustain the thrusts to which they are subject. The vanes (6) are mounted in the radial slots (32) of the internal rotor (3), with slide adjustment, but which provide the best sealing between the chambers, the outer shell (1) and the lids (2).

Each vane (6) is pressed radially against the inner surface of the shell (1) by spring (7) to guarantee the best possible sealing.

Figure 6 details a preferred profile of the vanes (6) which may present rounded edges (61) in order to temper its sliding over the undulated surface formed by the chambers of the outer shell (1), improving sealing.

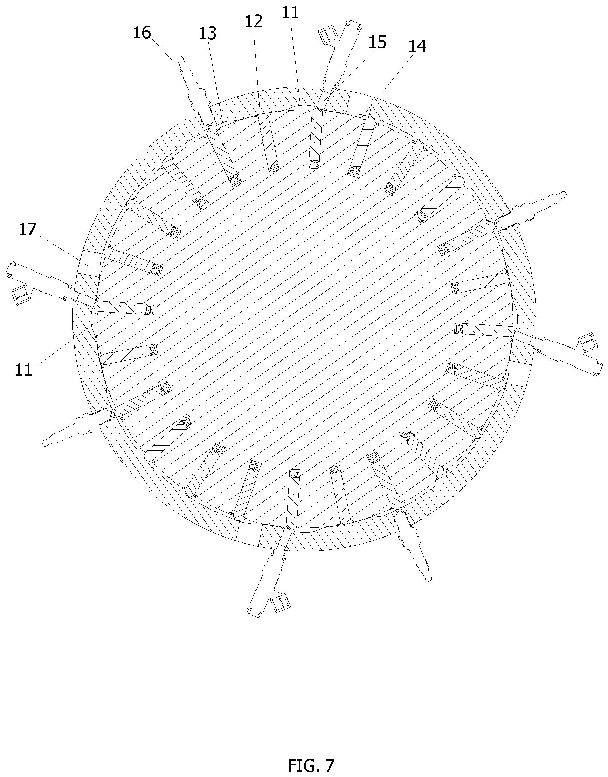

Figure 7 details the example of the possible engine of figure 3 which performs four cycles per revolution, on the inner surface of the shell (1) cavities are executed, acting as inlet (11), compression (12), explosion (13) and escape (14) chambers. The working path of the engine lies in the following stages: Lets in, Compresses, Explode (expands and performs work) and Escape. The path is a direct, minimal pathway, without comings and goings, which starts at the inlet chamber (11) which **LETS IN** air through the butterfly valve (Cycle Diesel) or air and fuel through a carburetor (Otto Cycle), soon after passing onto the compression chamber (12) which **COMPRESSES,** followed by the reception of a jet of fuel (Cycle Diesel) or an electric spark (Otto Cycle) which **EXPLODES and EXPANDS** in the explosion chamber (13). The more intense the expansion, the greater the pressure and the energy contained in the fuel, performing **WORK** on the path of maximum torque and maximum distance, obtaining the maximum energy usage with the minimum of thrust. So the path and consequently, the engine, are at maximum energy efficiency. Finally, the **ESCAPE** of the gases occurs through the discharge in the escape chamber (14).

In the engine that operates on the Otto cycle, the outer shell (1) next to the inlet chamber (11) presents a carburetor and a feed duct (15) of the air and fuel mixture. At the start of the explosion chamber (13) the spark plug (16) is positioned. The end of the explosion chamber (13) characterizes an escape chamber (14) where the escape duct (17) is positioned.

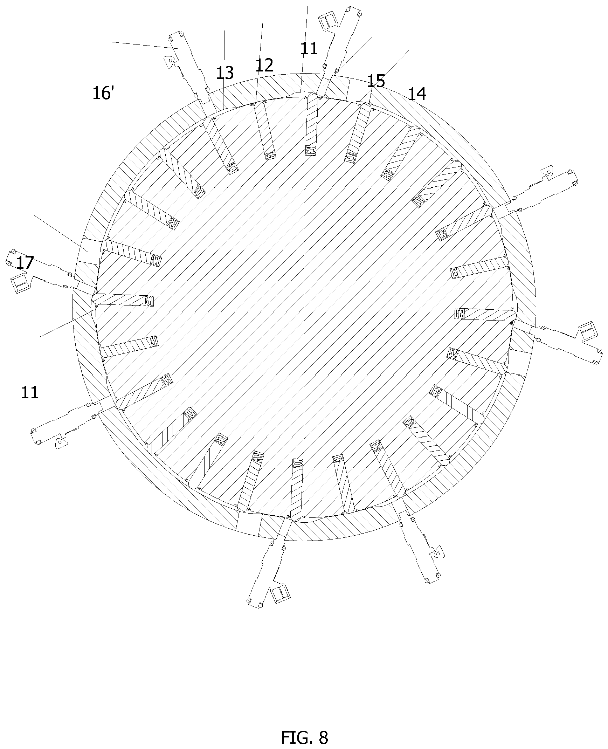

Figure 8 details an engine that operates on the Diesel cycle, whose outer shell (1) next to the inlet chamber (11) presents a butterfly valve and an air feed duct (15). At the start of the explosion chamber (13), the fuel injection spout (16') is positioned. The end of the explosion chamber (13) characterizes an escape chamber (14) where the escape duct (17) is positioned.

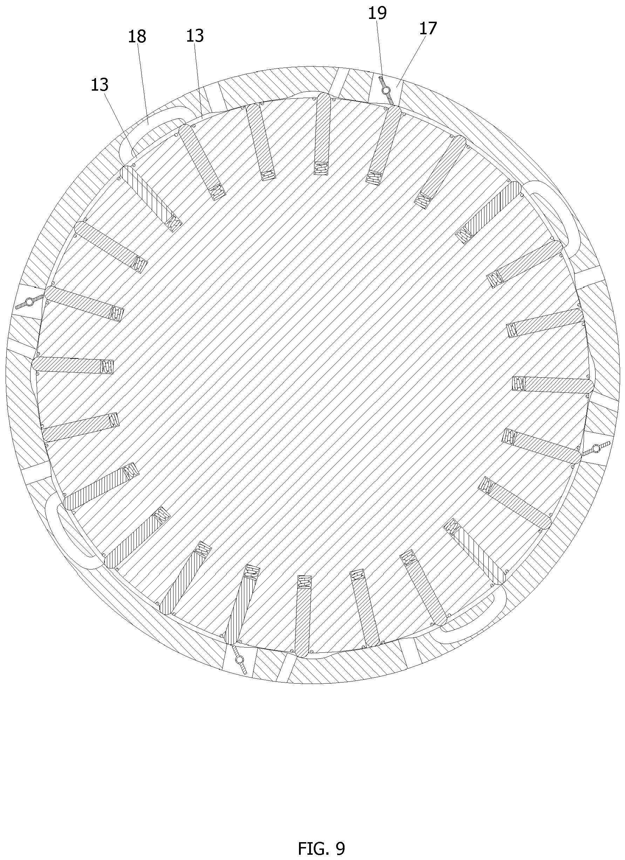

Figure 9 details the outer shell (1) of the engine which presents the effect of the **engine brake** which is comprised of a channel (18) which interconnnects two adjacent explosion chambers (13). It consists of a system that acts on the discharge of the gases stemming from the burning, comprised of a gas bypass device installed soon after the explosion, which cease their effect on the continuous vane and will leave further ahead. There is thus created a low-pressure region, just ahead of the vane which is in the explosion region, where the train of chambers is working. Coupled to the by-pass and working at the same time, a regulating obstruction device is placed for the discharge of burned gases. With this closing system, when driven, the engine will still work in a stricter regime, further helping with the brakes. This will make its working safer in emergencies.

Optionally, the engine brake may present a butterfly valve (19) inside the escape duct (17) to order to create another restriction to the rotation of the internal rotor (3).

This engine brake can be applied both on the Diesel cycle and on the Otto cycle as in the Two-Stroke Cycle.

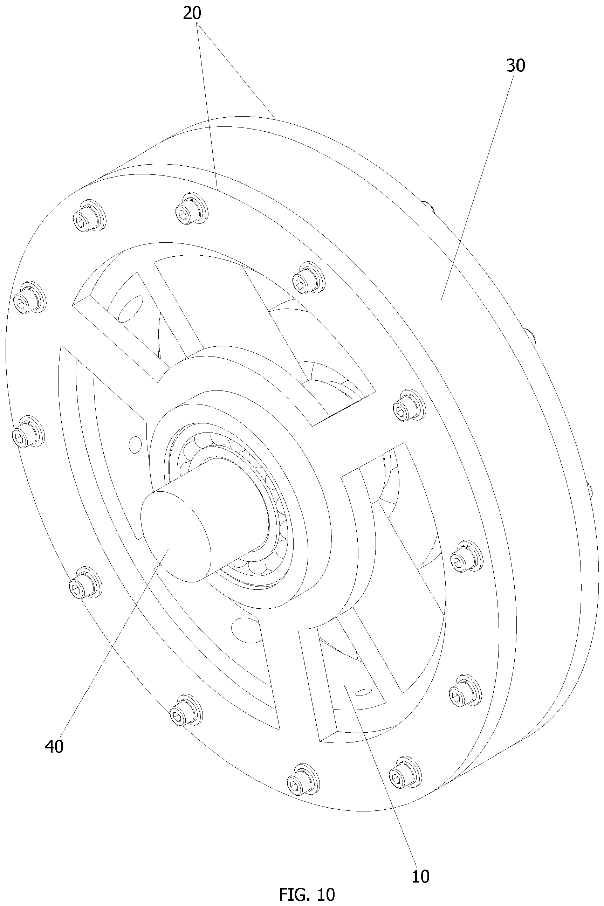

Figure 10 illustrates a constructive and exemplary option of the rotary engine which is comprised of an inner shell (10) inlaid in a central axis (40), two lids (20) and an outer rotor (30) which can be applied as Reaction Engine.

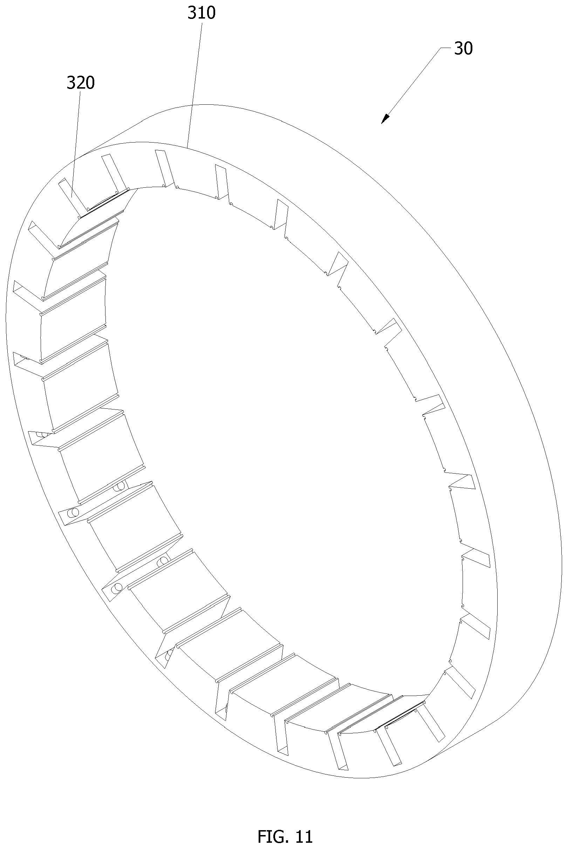

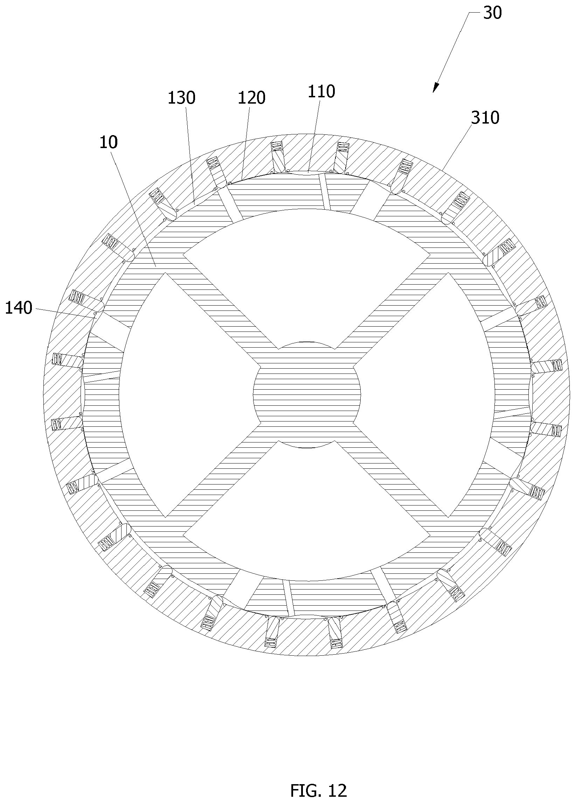

As seen figures 11 and 12, on the outer surface of the shell (10), chambers (110, 120, 130 and 140) are executed, suitably shaped to enable the working of the engine, as detailed ahead. The outer rotor (30) fulfills the function of drive axle and is ring-shaped (310) where radial slots (320) are machined which house vanes (60). Each slot radial (320) can house one or more vanes (60) which are rectangular plates having a suitable thickness to sustain the thrusts to which they are subject. The vanes (60) are mounted in the radial slots (320) of the outer rotor (30) with slide adjustment, but which provide the best sealing between the chambers, the inner shell (10) and the lids. Each vane (60) is pressed radially against the inner shell (10) by a spring (70) to guarantee the best possible sealing.

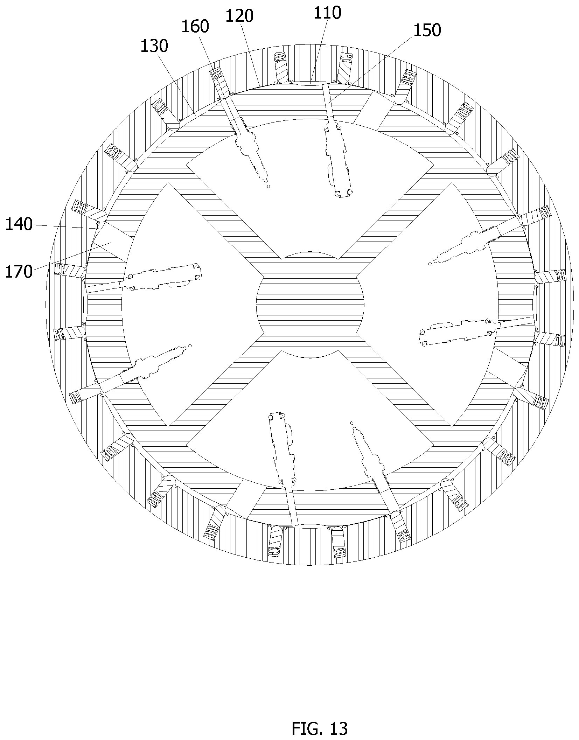

Figure 13 illustrates the constructive option of the engine that operates on the Otto cycle, whose inner shell (10) next to the inlet chamber (110) presents the feed duct (150) of the air and fuel mixture. At the start of the explosion chamber (130) a spark plug (160) is positioned. The end of the explosion chamber (130) characterizes an escape chamber (140) where the escape duct (170) is positioned.

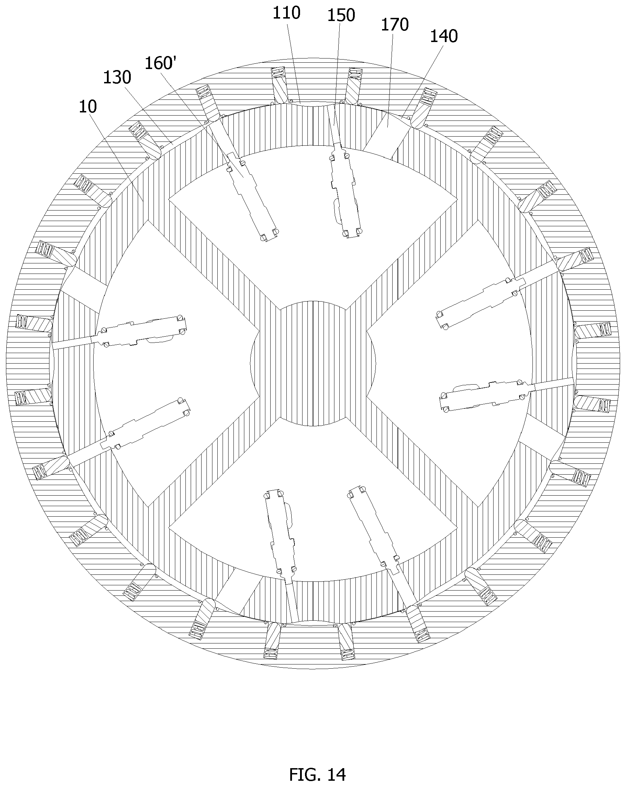

Figure 14 details the constructive option of the engine that operates on the Diesel cycle, whose inner shell (10) next to the inlet chamber (110) presents an air feed duct (150). At the start of the explosion chamber (130) the fuel injection spout (160') is positioned. The end of the explosion chamber (130) characterizes an escape chamber (140) where the escape duct (170) is positioned.

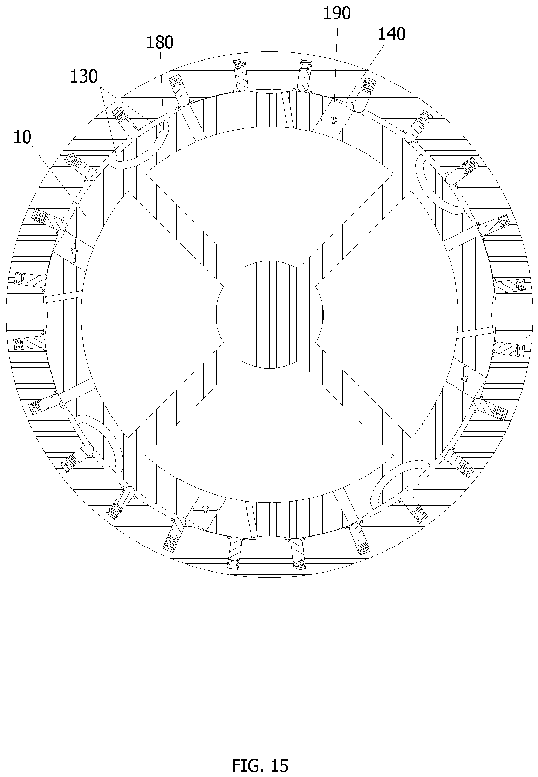

Figure 15 details the inner shell (10) of the engine which presents the effect of the engine brake which consists of a channel (180) that interconnects two adjacent explosion chambers (130). This engine brake can be applied to both cycles, Diesel and Otto.

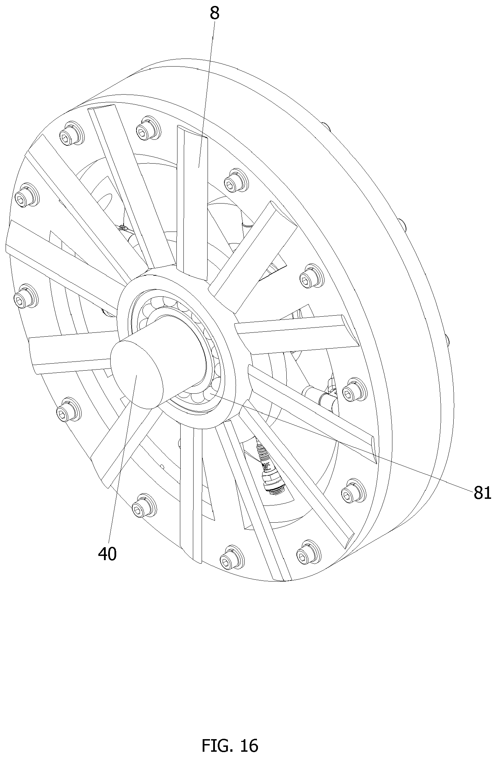

Figure 16 illustrates the constructive option of the engine applied as reaction engine which can operate on the Otto cycle or Diesel cycle, presenting a set of propellers (8) with a central pillow block (81) that rotates on the central axis (40).

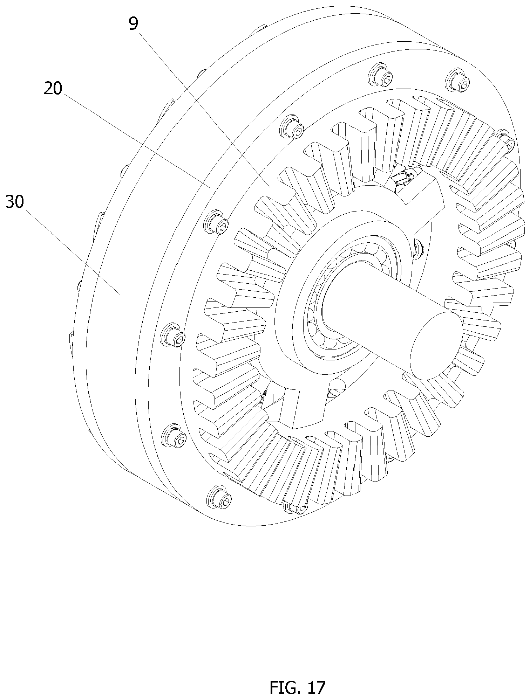

Figure 17 illustrates an option of the rotary engine which presents a transmission system (9) mounted on one of the lids (20) of the outer rotor (30), for example, a crown and pinion system.

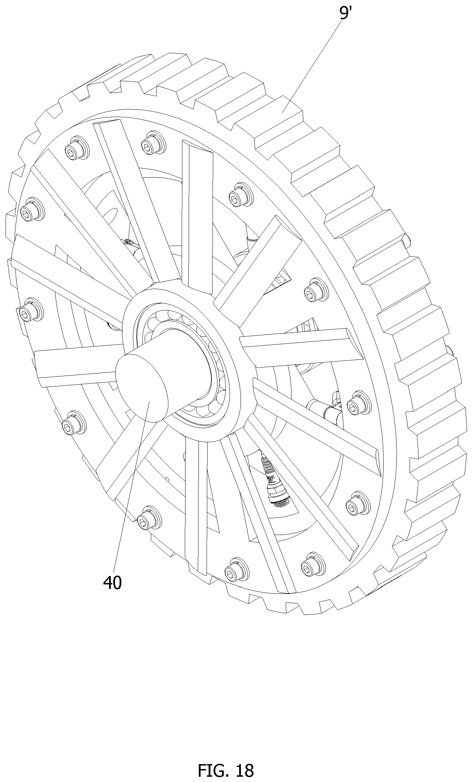

Figure 18 illustrates an option of the rotary engine which presents a transmission system (9') mounted on the periphery of the outer ring, for example, a straight-cog gearing.

It is emphasized that the drawings and description presented are not intended to limit the forms of carrying out the inventive concept now proposed, but rather to illustrate and render comprehensible the conceptual innovations disclosed in this solution. Therefore, the descriptions and images should be interpreted illustratively and not limitatively, and there may be other equivalent or similar forms of implementation which should be deemed within the scope of the present invention.

The present specification refers to an inventive rotary internal combustion engine endowed with vanes that results in a new technical effect in relation to the state of the art, thus proving its novelty, inventive activity, full disclosure and industrial application, meeting all the essential requirements for the grant of a patent of invention.

## Claims

1. **A Rotary Vane Internal Combustion Engine characterized by** comprising an outer shell (1) in the shape of a fixed outer ring with two lids (2), an internal rotor (3) with an inlaid central shaft (4) and bearings (5) which support the central shaft (4), and on the inner surface of the shell (1) straight-cog gearing type cavities are made acting as inlet (11), compression (12), explosion (13) and escape (14) chambers, the internal rotor (3) being endowed with drive axle and presents the shape of a cylindrical body (31) where the radial slots (32) are machined which house at least one vane (6) which is pressed radially against the inner surface of the shell (1) by a spring (7).

2. **The Rotary Vane Internal Combustion Engine,** according to claim 1, **characterized in that** the vanes (6) present rounded edges (61).

3. **The Rotary Vane Internal Combustion Engine,** according to either of claims 1 or 2, **characterized by** having on the outer shell (1) of the engine that operates on the Otto cycle and next to the inlet chamber (11) a carburetor and a feed duct (15) of the air and fuel mixture, and at the start of the explosion chamber (13) the spark plug (16) is positioned and at the end of the explosion chamber (13) an escape chamber (14) where the escape duct (17) is positioned.

4. **The Rotary Vane Internal Combustion Engine,** according to either of claims 1 or 2, **characterized by** having on the outer shell (1) of the engine that operates on the Diesel cycle next to the inlet chamber (11) a butterfly valve and an air feed duct (15), and at the start of the explosion chamber (13) a fuel injection spout (16') is positioned, and at the end of the explosion chamber (13) an escape chamber (14) where the escape duct (17) is positioned.

5. **The Rotary Vane Internal Combustion Engine,** according to either of claims 1 or 2, **characterized by** having on the outer shell (1) channels (18) which interconnect two adjacent explosion chambers (13) acting on the discharge of the gases stemming from the burning, comprised by a gas by-pass device.

6. **The Rotary Vane Internal Combustion Engine,** according to claim 5, **characterized in that** the engine brake is endowed with a butterfly valve (19) inside the escape duct (17) to restrict the rotation of the internal rotor (3).

7. **The Rotary Vane Internal Combustion Engine characterized by** being comprised of an inner shell (10) inlaid in a central axis (40), two lids (20) and an outer rotor (30), and the outer surface of the shell (10) has inlet chambers (110), compression chamber (120), explosion chamber (130) and escape chamber (140) and the outer rotor (30) is ring shaped (310) where radial slots (320) are machined which house, at least one vane (60) which is pressed radially against the inner shell (10) by spring (70).

8. **The Rotary Vane Internal Combustion Engine,** according to claim 7, **characterized in that** the vanes (60) have rounded edges.

9. **The Rotary Vane Internal Combustion Engine,** according to either of claims 7 or 8, **characterized by** having on the inner shell (10) of the engine that operates on the Otto cycle next to the inlet chamber (110) a feed duct (150) of the air and fuel mixture, at the start of the explosion chamber (130) a spark plug (160) is positioned and at the end of the explosion chamber (130) an escape chamber (140) where the escape duct (170) is positioned.

10. **The Rotary Vane Internal Combustion Engine,** according to either of claims 7 or 8, **characterized by** having on the inner shell (10) of the engine that operates on the Diesel cycle, next to the inlet chamber (110) an air feed duct (150), at the start of the explosion chamber (130) a fuel injection spout (160') is positioned and at the end of the explosion chamber (130) an escape chamber (140) where the escape duct (170) is positioned.

11. **The Rotary Vane Internal Combustion Engine,** according to either of claims 9 or 10, **characterized by** having on the inner shell (10) channels (180) which interconnect two adjacent explosion chambers (130) acting on the discharge of gases stemming from the burning, comprised by a gas bypass device.

12. **The Rotary Vane Internal Combustion Engine,** according to one of claims 9, 10 or 11, **characterized by** having a set of propellers (8) with a central pillow block (81) that rotates on the central axis (40).

13. **The Rotary Vane Internal Combustion Engine,** according to one of claims 9, 10, 11 or 12, **characterized by** having a transmission system (9) mounted on one of the lids (20) of the outer rotor (30), of the crown or pinion type.

14. **The Rotary Vane Internal Combustion Engine,** according to one of claims 9, 10, 11 or 12, **characterized by** having a transmission system (9) mounted on the periphery of the outer ring, of the straight-cog gearing type.
